# EUROPEAN PATENT SPECIFICATION

(11) **EP 2 608 883 B1**
(45) Date of publication and mention of the grant of the patent: **17.04.2019**
(21) Application number: 11825593.4
(22) Date of filing: 18.07.2011
(51) Int. Cl.: C08F 10/02, C08F 4/654, C08F 4/655, C08F 110/02

(54) **SEQUENTIAL FORMATION OF ZIEGLER-NATTA CATALYST USING NON-BLENDED COMPONENTS**
SEQUENTIELLE BILDUNG EINES ZIEGLER-NATTA-KATALYSATORS MITHILFE NICHT-GEMISCHTER KOMPONENTEN
FORMATION SÉQUENTIELLE D'UN CATALYSEUR ZIEGLER-NATTA À PARTIR DE COMPOSANTS NON MÉLANGÉS

(30) Priority: 23.08.2010 US 861349
(43) Date of publication of application: 03.07.2013
(73) Proprietor: Fina Technology, Inc., Houston, TX 77267-3312 (US)
(72) Inventor: ZHANG, Lei, Seabrook TX 77586 (US); BLACKMON, Kenneth, Houston TX 77062 (US); RAUSCHER, David, Angleton TX 77515 (US)
(74) Representative: Raboin, Jean-Christophe
(86) International application number: PCT/US2011/044305
(87) International publication number: WO 2012/036785

(56) References cited:
- WO-A1-2007/149911
- WO-A1-2011/133313
- US-A- 4 855 271
- US-A- 5 567 665
- US-A1- 2001 039 241
- US-A1- 2004 058 802
- US-A1- 2005 209 094
- US-B1- 6 693 058

## Description

### FIELD

Embodiments of the present invention generally relate to methods of forming Ziegler-Natta type catalyst compositions for olefin polymerization.

### BACKGROUND

As reflected in the patent literature, many processes for forming Ziegler-Natta catalyst systems utilize blends of components. Unfortunately, such blends generally are specialty chemicals having a high production cost. In an effort to reduce cost, the use of cheaper raw (non-blended) components can undesirably produce catalysts with lower activity and smaller D₅₀ particle size, which may not only slow catalyst synthesis but also yield polymer with poor morphology.

Therefore, to reduce production costs, a need exists to develop processes that use cheaper components and/or fewer processing steps for the formation of Ziegler-Natta catalysts capable of producing polymers having similar properties and production throughput as compared to polymers produced from catalysts formed from expensive blends. WO 2011/133313A1 discloses in example 2 a process for the preparation of a polymerization catalyst according to the following steps: 1) blending of butyl ethyl magnesium and triethyl aluminium prior to contacting the 2-ethyl hexanol, 2) addition of titanium isopropoxide Ti(OiPr)4 and TiCl₄ to form reaction product solution A, 3) addition of titanium n-butoxide to reaction product solution A to form reaction product solution B , 4) addition of TiCl₄ to reaction product solution B to form reaction product solid C, 5) addition of TiCl₄ to reaction product solid C to form reaction product solid D, 6) addition of TiCl₄ to reaction product solid D to form reaction product solid E, 7) addition of a reducing agent to reaction product solid E to form the catalyst. This document does not disclose a two TiCl₄ steps process. WO 2007/14991A1 discloses a process to form Ziegler-Natta catalyst comprising 1) contacting an alkyl magnesium compound with an alcohol to form a magnesium dialkoxide compound, 2) contacting the magnesium dialkoxide compound with a plurality of first agents to form reaction product "A", wherein the plurality of first agents comprise a first compound and a second compound, 3) contacting reaction product "A" with a second agent to form reaction product "B" wherein the second agent comprises a transition metal and halogen, 4) contacting reaction product "B" with a third agent to form reaction product "C" wherein the third agent comprises a first metal halide, 5) optionally contacting reaction product "C" with a fourth agent to form reaction product "D", wherein the fourth agent comprises a second metal halide, and 6) contacting reaction product "D" with a fifth agent to form a Ziegler-Natta catalyst component, wherein the fifth agent comprises an organoaluminium compound. This document at least does not disclose the process to contact an alkyl magnesium compound with a viscosity modifier prior to contact with an alcohol. US 2004/0058802A1 discloses a process for making a Ziegler-Natta catalyst comprising 1) contacting at the same time an alkyl magnesium compound with an alcohol and an aluminium alkyl to form a magnesium dialkoxide compound, halogenating the magnesium dialkoxide to form a reaction product A, contacting the reaction product A with a halogenating/titanating agent to form reaction product B, contacting the reaction product B with a second halogenating/titanating agent to form reaction product C, contacting the reaction product C with a third halogenating/titanating agent to form reaction product D and then treating reaction product D with a preactivation agent to form a catalyst.

### SUMMARY

Embodiments of the present invention include methods of forming catalysts. The methods generally include contacting an alkyl magnesium compound with a viscosity modifier prior to contact with an alcohol to form a magnesium dialkoxide compound; contacting the magnesium dialkoxide compound with a first titanium alkoxide and a first agent to form a first solution reaction product "A", wherein the titanium alkoxide and the first agent are non-blended individual components prior to contacting the magnesium dialkoxide; contacting the first solution reaction product "A" with a second titanium alkoxide to form a second solution reaction product "B"; contacting the second solution reaction product "B" with a second agent to form a first solid reaction product "C"; contacting the first solid reaction product "C" with a third agent to form a second solid reaction product "D"; and contacting the second solid reaction product "D" with a reducing agent to form a catalyst component with the proviso that the solid reaction product D is not contacted with TiCl₄ before contacting it with a reducing agent to form a catalyst component.

One or more embodiments include the method of the preceding paragraph, wherein the alkyl magnesium compound is represented by the formula MgR¹R², wherein R¹ and R² are independently selected from C₁ to C₁₀ alkyls.

One or more embodiments include the method of any preceding paragraph, wherein the alkyl magnesium compound is selected from butyl ethyl magnesium, diethyl magnesium, dipropyl magnesium, dibutyl magnesium, and combinations thereof.

One or more embodiments include the method of any preceding paragraph, wherein the viscosity modifier is represented by the formula AlR³₃, wherein R³ is selected from C₁ to C₁₀ alkyl compounds.

One or more embodiments include the method of any preceding paragraph, wherein the viscosity modifier is selected from trimethyl aluminum, triisobutyl aluminum, triethyl aluminum, n-octyl aluminum, n-hexyl aluminum, and combinations thereof.

One or more embodiments include the method of any preceding paragraph, wherein the viscosity modifier comprises triethyl aluminum.

One or more embodiments include the method of any preceding paragraph, wherein the viscosity modifier contacts the alkyl magnesium compound in an equivalent of from 0.01 to t 0.6.

One or more embodiments include the method of any preceding paragraph, wherein the alcohol is represented by the formula R⁴OH, wherein R⁴ is selected from C₂ to C₂₀ alkyls.

One or more embodiments include the method of any preceding paragraph, wherein the alcohol is selected from butanol, isobutanol, 2-ethylhexanol, and combinations thereof.

One or more embodiments include the method of any preceding paragraph, wherein the alcohol contacts the alkyl magnesium compound in an equivalent of from 0.5 to 6.

One or more embodiments include the method of any preceding paragraph, wherein the first titanium alkoxide is represented by the formula Ti(OR⁵)₄, wherein R⁵ is selected from C₂ to C₂₀ alkyl groups.

One or more embodiments include the method of any preceding paragraph, wherein the first titanium alkoxide is selected from titanium 2-ethylhexyl alkoxide, titanium isopropoxide, titanium n-butoxide, and combinations thereof.

One or more embodiments include the method of any preceding paragraph, wherein the first titanium alkoxide contacts the magnesium dialkoxide compound in an equivalent of from 0.25 to 3.

One or more embodiments include the method of any preceding paragraph, wherein the first agent includes a metal halide.

One or more embodiments include the method of any preceding paragraph, wherein the first agent includes titanium halide.

One or more embodiments include the method of any preceding paragraph, wherein the first agent contacts the magnesium dialkoxide compound in an equivalent of from 0.05 to 2.

One or more embodiments include the method of any preceding paragraph, wherein the second titanium alkoxide is represented by the formula Ti(OR⁶)₄, wherein R⁶ is selected from C₂ to C₂₀ alkyl groups.

One or more embodiments include the method of any preceding paragraph, wherein the second titanium alkoxide is selected from titanium 2-ethylhexyl alkoxide, titanium isopropoxide, titanium n-butoxide, and combinations thereof.

One or more embodiments include the method of any preceding paragraph, wherein the second titanium alkoxide contacts the first solution reaction product "A" in a molar equivalent of from 0.05 to 3.

One or more embodiments include the method of any preceding paragraph, wherein the second agent includes a metal halide.

One or more embodiments include the method of any preceding paragraph, wherein the second agent contacts the second solution reaction product "B" in an equivalent of from 0.5 to 5.

One or more embodiments include the method of any preceding paragraph, wherein the third agent includes a metal halide.

One or more embodiments include the method of any preceding paragraph, wherein the third agent contacts the first solid reaction product "C" in an equivalent of from 0.5 to 5.

One or more embodiments include the method of any preceding paragraph, wherein the reducing agent is selected from an organolithium compound, an organomagnesium compound, an organoaluminum compound, and combinations thereof.

One or more embodiments include a catalyst component formed by the method of any preceding paragraph.

One or more embodiments include a method for polymerizing olefin monomers. The method generally includes contacting olefin monomer with a catalyst to form a polyolefin, wherein the catalyst is formed by a process comprising: contacting an alkyl magnesium compound with a viscosity modifier prior to contact with an alcohol to form a magnesium dialkoxide compound; contacting the magnesium dialkoxide compound with a first titanium alkoxide and a first agent to form a first solution reaction product "A", wherein the titanium alkoxide and the first agent are non-blended individual components prior to contacting the magnesium dialkoxide; contacting the first solution reaction product "A" with a second titanium alkoxide to form a second solution reaction product "B"; contacting the second solution reaction product "B" with a second agent to form a first solid reaction product "C"; contacting the first solid reaction product "C" with a third agent to form a second solid reaction product "D", and contacting the second solid reaction product "D" with a reducing agent to form a catalyst component with the proviso that the solid reaction product D is not contacted with TiCl₄ before contacting it with a reducing agent to form a catalyst component..

One or more embodiments include the method of the preceding paragraph, wherein the polyolefin is high density polyethylene.

One or more embodiments include a polyethylene polymer formed by the method of any preceding paragraph.

### BRIEF DESCRIPTION OF DRAWINGS

Figure 1 illustrates the particle size distribution D50 of various catalyst samples.
Figure 2 illustrates the molecular weight distribution of various catalyst samples.
Figure 3 illustrates that H₂/C₂ feed ratio for polymerization with various catalyst samples.

### DETAILED DESCRIPTION

### Introduction and Definitions

A detailed description will now be provided. Each of the appended claims defines a separate invention, which for infringement purposes is recognized as including equivalents to the various elements or limitations specified in the claims. Depending on the context, all references below to the "invention" may in some cases refer to certain specific embodiments only. In other cases it will be recognized that references to the "invention" will refer to subject matter recited in one or more, but not necessarily all, of the claims. Each of the inventions will now be described in greater detail below, including specific embodiments, versions and examples, but the inventions are not limited to these embodiments, versions or examples, which are included to enable a person having ordinary skill in the art to make and use the inventions when the information in this patent is combined with available information and technology.

Various terms as used herein are shown below. To the extent a term used in a claim is not defined below, it should be given the broadest definition skilled persons in the pertinent art have given that term as reflected in printed publications and issued patents at the time of filing. Further, unless otherwise specified, all compounds described herein may be substituted or unsubstituted and the listing of compounds includes derivatives thereof.

Further, various ranges and/or numerical limitations may be expressly stated below. It should be recognized that unless stated otherwise, it is intended that endpoints are to be interchangeable. Further, any ranges include iterative ranges of like magnitude falling within the expressly stated ranges or limitations.

The term "activity" refers to the weight of product produced per weight of catalyst used in a process per hour of reaction at a standard set of conditions (e.g., grams product/gram catalyst/hr).

The term "substituted" refers to an atom, radical or group that replaces a hydrogen in a chemical compound.

The term "blend" refers to a mixture of compounds that are blended and/or mixed prior to contact with another compound.

The term "equivalent" refers to a molar ratio of a component to a starting material.

As used herein, the term "room temperature" means that a temperature difference of a few degrees does not matter to the phenomenon under investigation, such as a preparation method. In some environments, room temperature may include a temperature of from 20°C to 28°C (68°F to 82°F), while in other environments, room temperature may include a temperature of from 10°C (50°F) to 32°C (90°F), for example. However, room temperature measurements generally do not include close monitoring of the temperature of the process and therefore such a recitation does not intend to bind the embodiments described herein to any predetermined temperature range.

### Catalyst Systems

Ziegler-Natta Catalysts systems are generally formed from the combination of a metal component (*e.g.,* a catalyst precursor) with one or more additional components, such as a catalyst support, a cocatalyst and/or one or more electron donors, for example.

A specific example of a Ziegler-Natta catalyst includes a metal component generally represented by the formula:

MRₓ;

wherein M is a transition metal; R is a halogen, an alkoxy, or a hydrocarboxyl group; and x is the valence of the transition metal. For example, x may be from 1 to 4.

The transition metal may be selected from Groups IV through VIB (*e.g.,* titanium, vanadium, or chromium), for example. R may be selected from chlorine, bromine, carbonates, esters, or an alkoxy groups in one embodiment. Examples of catalyst components include TiCl₄, TiBr₄, Ti(OC₄H₉)₃Cl, Ti(OC₄H₉)₂Cl₂, Ti(OC₂H₅)₃Cl, Ti(OC₃H₇)₂Cl₂, Ti(OC₆H₁₃)₂Cl₂, Ti(OC₂H₅)₂Br₂ and Ti(OC₁₂H₂₅)Cl₃, for example.

Those skilled in the art will recognize that a catalyst may be "activated" in some way before it is useful for promoting polymerization. As discussed further below, activation may be accomplished by contacting the catalyst with an activator, which is also referred to in some instances as a "cocatalyst". Embodiments of Ziegler-Natta activators include organoaluminum compounds, such as trimethyl aluminum (TMA), triethyl aluminum (TEAl) and triisobutyl aluminum (TiBAl), for example.

The Ziegler-Natta catalyst system may further include one or more electron donors, such as internal electron donors and/or external electron donors. Internal electron donors may be used to reduce the atactic form of the resulting polymer, thus decreasing the amount of xylene soluble material in the polymer. The internal electron donors may include amines, amides, esters, ketones, nitriles, ethers, thioethers, thioesters, aldehydes, alcoholates, salts, organic acids, phosphines, diethers, succinates, phthalates, malonates, maleic acid derivatives, dialkoxybenzenes or combinations thereof, for example. (*See,* U.S. Pat. No. 5,945,366 and U.S. Pat. No. 6,399,837, which are incorporated by reference herein.)

External electron donors may be used to further control the amount of atactic polymer produced. The external electron donors may include monofunctional or polyfunctional carboxylic acids, carboxylic anhydrides, carboxylic esters, ketones, ethers, alcohols, lactones, organophosphorus compounds and/or organosilicon compounds, for example. In one embodiment, the external donor may include diphenyldimethoxysilane (DPMS), cyclohexylmethyldimethoxysilane (CMDS), diisopropyldimethoxysilane (DIDS) and/or dicyclopentyldimethoxysilane (CPDS), for example. The external donor may be the same or different from the internal electron donor used.

The components of the Ziegler-Natta catalyst system (*e.g.,* catalyst, activator and/or electron donors) may or may not be associated with a support, either in combination with each other or separate from one another. The Ziegler-Natta support materials may include a magnesium dihalide, such as magnesium dichloride or magnesium dibromide, silica, or alumina, for example.

Specific, non-limiting examples of formation processes for Ziegler-Natta catalysts are described in U.S. Pat. No. 6,734,134 and U.S. Pat. No. 6,174,971, which are incorporated by reference herein.

Embodiments of the invention generally include utilizing non-blended components during catalyst formation. A representative, non-limiting, illustration of a possible reaction scheme for use in embodiments of the invention may be illustrated as follows:
1) MgR¹R²/AlR³₃ + 2 R⁴OH → Mg(OR⁴)₂
2) Mg(OR⁴)₂+ Ti(OR⁵)₄ + TiCl₄ → "A"_{(soln.)}
3) "A"_{(soln.)}+ Ti(OR⁶)₄ → "B"_{(soln.)}
4) "B"_{(soln.)} + TiCl₄ → "C"_{(solid)}
5) "C"_{(solid)} + TiCl₄ → "D"_{(solid)}
6) "D"_{(solid)} + AlR⁷₃ → Catalyst
with the proviso that the solid reaction product D is not contacted with TiCl₄ before contacting it with a reducing agent to form a catalyst component.

Note that while the primary reaction components are illustrated above, additional components may be reaction products or used in such reactions and not illustrated above. Further, while described herein in terms of primary reaction steps, it is known to those skilled in the art that additional steps may be included in the reaction schemes and processes described herein (*e.g.,* washing, filtering, drying, stirring, agitating, decanting steps), while it is further contemplated that other steps may be eliminated in certain embodiments. In addition, it is contemplated that any of the agents described herein may be added in combination with one another so long as the order of addition complies with the spirit of the invention.

As illustrated by the reaction scheme above, embodiments of the invention include methods of forming Ziegler-Natta catalysts. The methods generally include the formation and/or providing of a magnesium dialkoxide compound represented by the formula Mg(OR⁴)₂. In one embodiment, the magnesium dialkoxide compound may be formed by contacting a magnesium containing compound with an alcohol to form the magnesium dialkoxide compound. In one or more embodiments, this reaction is conducted at a reaction temperature of from room temperature to 90°C or from room temperature to 85°C for a time of up to 10 hours, for example.

The magnesium containing compound may be represented by the formula:

MgR¹R²;

wherein R¹ and R² are independently selected from C₁ to C₁₀ alkyl groups. Non-limiting illustrations of magnesium containing compounds include butyl ethyl magnesium (BEM), diethyl magnesium, dipropyl magnesium and dibutyl magnesium, for example.

The alcohol may be represented by the formula:

R⁴OH;

wherein R⁴ is selected from C₂ to C₂₀ alkyl groups. Non-limiting illustrations of alcohols include butanol, isobutanol and 2-ethylhexanol, for example. The alcohol may be added to the magnesium containing compound in an equivalent (*i.e.,* per mole of [Mg]) of from 0.5 to 6 or from 1 to 3, for example.

The method may further include contacting or blending the magnesium containing compound with a viscosity modifier to make the resultant solution more amenable for controlled, larger catalyst particle size precipitation. The viscosity modifier may include organoaluminum compounds represented by the formula:

AlR³₃;

wherein R³ is selected from C₁ to C₁₀ alkyl compounds. Non-limiting illustrations of the aluminum alkyl compounds generally include trimethyl aluminum (TMA), triisobutyl aluminum (TIBAl), triethyl aluminum (TEAl), n-octyl aluminum and n-hexyl aluminum, for example. In one specific embodiment, the viscosity modifier includes TEAl. In general, an increase in the amount of viscosity modifier added increases the catalyst D₅₀ particle size and improves fluff morphology. Thus, depending upon the desired catalyst particle size and fluff morphology, the viscosity modifier may be added to the magnesium-containing compound in a molar equivalent of from 0.01 to 0.6, or from 0.05 to 0.4 or from 0.1 to 0.3, for example.

In preparing the resultant magnesium dialkoxide compound, the amount of alcohol R⁴OH added to the magnesium-containing compound may be adjusted to convert substantially all metal alkyls to non-reducing metal alkoxides. For example, the alcohol may be added to the magnesium containing compound/viscosity modifier in a molar equivalent of from 1 to 6, or from 1 to 3 or from 2 to 3, for example.

In subsequent steps, prior efforts to sequentially form the Ziegler-Natta catalyst generally utilized blends of specialty chemicals having a high production cost. Conversely, the various embodiments of the present invention generally include replacing blended agents with cheaper non-blended components, thereby substantially reducing catalyst production cost by as much as 75% while retaining one or more of the beneficial properties (*e.g.,* polymer activity, fluff particle size distribution) of catalysts obtained via blends.

In particular, embodiments include a subsequent step of contacting the magnesium dialkoxide compound with a second compound and a third compound to form a reaction product "A". The resulting reaction product "A" is a solution product. As used herein, "solution" refers to homogenous mixture of two or more compounds.

This reaction may occur in the presence of an inert solvent. A variety of hydrocarbons can be used as the inert solvent, but any hydrocarbon selected should remain in liquid form at all relevant reaction temperatures and the ingredients used to form the supported catalyst composition should be at least partially soluble in the hydrocarbon. Accordingly, the hydrocarbon is considered to be a solvent herein, even though in certain embodiments the ingredients are only partially soluble in the hydrocarbon. Suitable hydrocarbon solvents include substituted and unsubstituted aliphatic hydrocarbons and substituted and unsubstituted aromatic hydrocarbons. For example, the inert solvent may include hexane, heptane, octane, decane, toluene, xylene, dichloromethane, chloroform, 1-chlorobutane or combinations thereof, for example.

In one or more embodiments, this reaction is conducted at a temperature of from 0°C to 100°C or from 20°C to 90°C for a time of from 0.2 hours to 24 hours or from 1 hour to t 4 hours, for example.

The second compound is a titanium alkoxide generally represented by the formula:

Ti(OR⁵)₄;

wherein R⁵ is selected from C₂ to C₂₀ alkyl groups. Non-limiting illustrations of the second compound include titanium alkoxides, such as titanium 2-ethylhexyl alkoxide, titanium isopropoxide Ti(OiPr)₄, titanium n-butoxide Ti(OBu)₄, and combinations thereof. The titanium alkoxide may be added to the magnesium alkoxide compound in a molar equivalent of from 0.25 to 3, or from 0.5 to 2 or from 0.5 to 1, for example.

The third compound is a first metal halide. In one example, the first metal halide may be added to the magnesium dialkoxide compound in a molar equivalent of from 0.05 to 2, or from 0.1 to 1 or from 0.1 to 0.5, for example.

The first metal halide may include any metal halide known to one skilled in the art, such as titanium tetrachloride (TiCl₄), for example.

The method further includes contacting the reaction product "A" with a titanium alkoxide to form reaction product "B". The resulting reaction product "B" is also a solution product. The titanium alkoxide may generally be represented by the formula:

Ti(OR⁶)₄;

wherein R⁶ is selected from C₂ to C₂₀ alkyl groups. Non-limiting illustrations of titanium alkoxides include titanium 2-ethylhexyl alkoxide, titanium n-butoxide Ti(OBu)₄, titanium isopropoxide Ti(OiPr)₄, and combinations thereof. The titanium alkoxide may be added to the reaction product "A" in a molar equivalent of from 0.05 to 3, or from 0.1 to 1.0 or from 0.25 to 0.75, for example.

The method may then include contacting reaction product "B" with a second metal halide to form a solid reaction product "C". This reaction may occur in the presence of an inert solvent. The inert solvents may include any of those solvents previously discussed herein, for example.

In one or more embodiments, this reaction is conducted at a temperature of from 0°C to 100°C or from 20°C to 90°C for a time of from 0.2 hours to 36 hours or from 1 hour to 4 hours, for example.

The second metal halide may be added to reaction product "B" in an amount sufficient to precipitate solid reaction product "C" out of solution. The second metal halide may include any metal halide known to one skilled in the art, such as titanium tetrachloride (TiCl₄), for example. The second metal halide may contact reaction product "B" in a molar equivalent of from 0.5 to 5, or from 1 to 4 or from 1.5 to 2.5, for example.

The method may then include contacting solid reaction product "C" with a third metal halide to form solid reaction product "D". This reaction may occur in the presence of an inert solvent, for example. The inert solvents may include any of those solvents previously discussed herein, for example. Further, in one or more embodiments, the reaction is conducted at room temperature.

The third metal halide may include any metal halide known to one skilled in the art, such as TiCl₄, for example. The third metal halide may contact reaction product "C" in a molar equivalent of from 0.5 to 5, or from 1 to 4 or from 1.5 to 2.5, for example.

The method then includes reducing the reaction product "D" to form an active catalyst. In one embodiment, reaction product "D" is reduced by contacting the reaction product "D" with a reducing agent AlR⁷₃. The reducing agent may be added to the reaction product "D" in a molar equivalent of from 0.02 to 2, or from 0.05 to 0.5 or from 0.1 to 0.25, for example.

The reducing agent may be selected from organolithium compounds, organomagnesium compounds, organoaluminum compounds, and combinations thereof, for example. In one, non-limiting embodiment, the organoaluminum compound is represented by the formula:

AlR⁷₃

wherein R⁷₃ is selected from C₁ to C₁₀ alkyl compounds. Non-limiting illustrations of the aluminum alkyl compounds generally include trimethyl aluminum (TMA), triisobutyl aluminum (TIBAl), triethyl aluminum (TEAl), n-octyl aluminum and n-hexyl aluminum, for example. In one specific embodiment, the reducing agent includes TEAl. The resulting catalyst is suitable for the polymerization of olefins.

As previously described, upon formation of a first solid reaction product "C", only one subsequent precipitation step is needed to form a second solid reaction product "D" prior to the reducing step to form a catalyst component of the present invention. In contrast, prior efforts to sequentially form the Ziegler-Natta catalyst generally utilized several precipitation steps subsequent to the initial formation of a solid reaction product and prior to a reducing step to form a catalyst. The use of fewer precipitation processing steps described herein for the formation of Ziegler-Natta catalysts capable of producing polymers having similar properties to polymers produced from catalysts formed from expensive blends and/or with additional precipitation steps advantageously enhances production throughput which also further reduces production and/or labor costs.

In one or more embodiments, it has been found that catalysts produced from the reaction scheme disclosed herein may exhibit somewhat smaller D₅₀ particle size and a lower fluff bulk density, while concomitantly demonstrating a higher activity, as compared to Ziegler-Natta catalyst formed from expensive blends. Furthermore, the catalysts produced from the reaction scheme disclosed may herein exhibit no fines and similar fluff particle size distribution as compared to Ziegler-Natta catalyst formed from expensive blends.

In yet another aspect, introducing the viscosity modifier AlR³₃ in such step of the catalyst synthesis scheme may also advantageously lead to faster solid particle settling rate during synthesis. In one or more embodiments, the solids (*e.g.,* intermediates) settling time is less than 15 minutes, for example.

Controlling the precipitation steps of the catalyst synthesis scheme by adjustments to either the concentration of the soluble catalyst precursor (*i.e.,* [Mg]) or the precipitating agent (*e.g.,* [TiCl₄]), or both, provides an effective means of adjusting the morphology of the solid catalyst component that results. For example, decreasing the concentration of the [Mg] in the catalyst synthesis solution may result in increased average particle size of the resulting catalyst component.

To increase batch yield and further reduce production cost, it may be desirable to reduce the amount of solvent at precipitation; however prior efforts have generally resulted in unacceptably small catalyst D₅₀ particle size due to a concomitant increase in [Mg]. It has been found that utilizing the viscosity modifier AlR³₃ results in sufficiently large catalyst D₅₀ particle size even while utilizing additional cost saving measures, such as reducing the quantity of solvent at precipitation.

### Polymerization Processes

As indicated elsewhere herein, catalyst systems are used to form polyolefin compositions. Once the catalyst system is prepared, as described above and/or as known to one skilled in the art, a variety of processes may be carried out using that composition. The equipment, process conditions, reactants, additives and other materials used in polymerization processes will vary in a given process, depending on the desired composition and properties of the polymer being formed. Such processes may include solution phase, gas phase, slurry phase, bulk phase, high pressure processes or combinations thereof, for example. (*See,* U.S. Patent No. 5,525,678; U.S. Patent No. 6,420,580; U.S. Patent No. 6,380,328; U.S. Patent No. 6,359,072; U.S. Patent No. 6,346,586; U.S. Patent No. 6,340,730; U.S. Patent No. 6,339,134; U.S. Patent No. 6,300,436; U.S. Patent No. 6,274,684; U.S. Patent No. 6,271,323; U.S. Patent No. 6,248,845; U.S. Patent No. 6,245,868; U.S. Patent No. 6,245,705; U.S. Patent No. 6,242,545; U.S. Patent No. 6,211,105; U.S. Patent No. 6,207,606; U.S. Patent No. 6,180,735 and U.S. Patent No. 6,147,173, which are incorporated by reference herein.)

In certain embodiments, the processes described above generally include polymerizing one or more olefin monomers to form polymers. The olefin monomers may include C₂ to C₃₀ olefin monomers, or C₂ to C₁₂ olefin monomers (*e.g.,* ethylene, propylene, butene, pentene, 4-methyl-1-pentene, hexene, octene and decene), for example. The monomers may include olefinic unsaturated monomers, C₄ to C₁₈ diolefins, conjugated or nonconjugated dienes, polyenes, vinyl monomers and cyclic olefins, for example. Non-limiting examples of other monomers may include norbornene, norbornadiene, isobutylene, isoprene, vinylbenzycyclobutane, styrene, alkyl substituted styrene, ethylidene norbornene, dicyclopentadiene and cyclopentene, for example. The formed polymer may include homopolymers, copolymers or terpolymers, for example.

Examples of solution processes are described in U.S. Patent No. 4,271,060, U.S. Patent No. 5,001,205, U.S. Patent No. 5,236,998 and U.S. Patent No. 5,589,555, which are incorporated by reference herein.

One example of a gas phase polymerization process includes a continuous cycle system, wherein a cycling gas stream (otherwise known as a recycle stream or fluidizing medium) is heated in a reactor by heat of polymerization. The heat is removed from the cycling gas stream in another part of the cycle by a cooling system external to the reactor. The cycling gas stream containing one or more monomers may be continuously cycled through a fluidized bed in the presence of a catalyst under reactive conditions. The cycling gas stream is generally withdrawn from the fluidized bed and recycled back into the reactor. Simultaneously, polymer product may be withdrawn from the reactor and fresh monomer may be added to replace the polymerized monomer. The reactor pressure in a gas phase process may vary from 100 psig to 500 psig, or from 200 psig to 400 psig or from 250 psig to 350 psig, for example. The reactor temperature in a gas phase process may vary from 30°C to 120°C, or from 60°C to 115°C, or from 70°C to 110°C or from 70°C to 95°C, for example. (*See,* for example, U.S. Patent No. 4,543,399; U.S. Patent No. 4,588,790; U.S. Patent No. 5,028,670; U.S. Patent No. 5,317,036; U.S. Patent No. 5,352,749; U.S. Patent No. 5,405,922; U.S. Patent No. 5,436,304; U.S. Patent No. 5,456,471; U.S. Patent No. 5,462,999; U.S. Patent No. 5,616,661; U.S. Patent No. 5,627,242; U.S. Patent No. 5,665,818; U.S. Patent No. 5,677,375 and U.S. Patent No. 5,668,228, which are incorporated by reference herein.)

Slurry phase processes generally include forming a suspension of solid, particulate polymer in a liquid polymerization medium, to which monomers and optionally hydrogen, along with catalyst, are added. The suspension (which may include diluents) may be intermittently or continuously removed from the reactor where the volatile components can be separated from the polymer and recycled, optionally after a distillation, to the reactor. The liquefied diluent employed in the polymerization medium may include a C₃ to C₇ alkane (*e.g.,* hexane or isobutane), for example. The medium employed is generally liquid under the conditions of polymerization and relatively inert. A bulk phase process is similar to that of a slurry process with the exception that the liquid medium is also the reactant (*e.g.,* monomer) in a bulk phase process. However, a process may be a bulk process, a slurry process or a bulk slurry process, for example.

In a specific embodiment, a slurry process or a bulk process may be carried out continuously in one or more loop reactors. The catalyst, as slurry or as a dry free flowing powder, may be injected regularly to the reactor loop, which can itself be filled with circulating slurry of growing polymer particles in a diluent, for example. Optionally, hydrogen (or other chain terminating agents, for example) may be added to the process, such as for molecular weight control of the resultant polymer. The loop reactor may be maintained at a pressure of from 27 bar to 50 bar or from 35 bar to 45 bar and a temperature of from 38°C to 121°C, for example. Reaction heat may be removed through the loop wall via any suitable method, such as via a double-jacketed pipe or heat exchanger, for example.

Alternatively, other types of polymerization processes may be used, such as stirred reactors in series, parallel or combinations thereof, for example. Upon removal from the reactor, the polymer may be passed to a polymer recovery system for further processing, such as addition of additives and/or extrusion, for example.

### Polymer Product

The polymers (and blends thereof) formed via the processes described herein may include, but are not limited to, linear low density polyethylene, elastomers, plastomers, high density polyethylenes, low density polyethylenes, medium density polyethylenes, polypropylene and polypropylene copolymers, for example.

Unless otherwise designated herein, all testing methods are the current methods at the time of filing.

In one or more embodiments, the polymers include ethylene based polymers. As used herein, the term "ethylene based" is used interchangeably with the terms "ethylene polymer" or "polyethylene" and refers to a polymer having at least 50 wt.%, or at least 70 wt.%, or at least 75 wt.%, or at least 80 wt.%, or at least 85 wt.%, or at least 90 wt.% polyethylene relative to the total weight of polymer, for example.

The ethylene based polymers may have a density (as measured by ASTM D-792) of from 0.86 g/cc to 0.98 g/cc, or from 0.88 g/cc to 0.965 g/cc, or from 0.90 g/cc to 0.965 g/cc, or from 0.925 g/cc to 0.97 g/cc, for example.

The ethylene based polymers may have a melt index (MI₂) (as measured by ASTM D-1238) of from 0.01 dg/min to 100 dg/min., or from 0.01 dg/min. to 25 dg/min., or from 0.03 dg/min. to 15 dg/min., or from 0.05 dg/min. to 10 dg/min, for example.

In one or more embodiments, the polymers include low density polyethylene.

In one or more embodiments, the polymers include linear low density polyethylene.

In one or more embodiments, the polymers include medium density polyethylene. As used herein, the term "medium density polyethylene" refers to ethylene based polymers having a density of from 0.92 g/cc to 0.94 g/cc or from 0.926 g/cc to 0.94 g/cc, for example.

In one or more embodiments, the polymers include high density polyethylene. As used herein, the term "high density polyethylene" refers to ethylene based polymers having a density of from 0.94 g/cc to 0.97 g/cc, for example.

### Product Application

The polymers and blends thereof are useful in applications known to one skilled in the art, such as forming operations (*e.g.,* film, sheet, pipe and fiber extrusion and co-extrusion as well as blow molding, injection molding and rotary molding). Films include blown, oriented or cast films formed by extrusion or co-extrusion or by lamination useful as shrink film, cling film, stretch film, sealing films, oriented films, snack packaging, heavy duty bags, grocery sacks, baked and frozen food packaging, medical packaging, industrial liners, and membranes, for example, in food-contact and non-food contact application. Fibers include slit-films, monofilaments, melt spinning, solution spinning and melt blown fiber operations for use in woven or non-woven form to make sacks, bags, rope, twine, carpet backing, carpet yarns, filters, diaper fabrics, medical garments and geotextiles, for example. Extruded articles include medical tubing, wire and cable coatings, sheets, such as thermoformed sheets (including profiles and plastic corrugated cardboard), geomembranes and pond liners, for example. Molded articles include single and multi-layered constructions in the form of bottles, tanks, large hollow articles, rigid food containers and toys, for example.

### Examples

Two catalysts were synthesized for comparison (via the catalyst synthesis method described below), Catalyst 1 via Scheme 1 below and Catalyst 2 via Scheme 2 below. It was observed that Catalyst 1 exhibited a smaller catalyst D50 than that of Catalyst 2 (*see,* Figure 1).

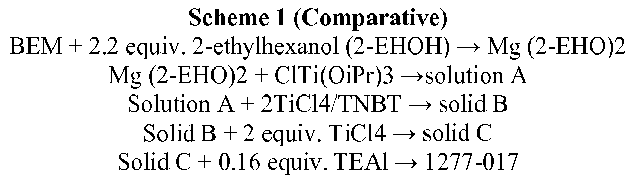

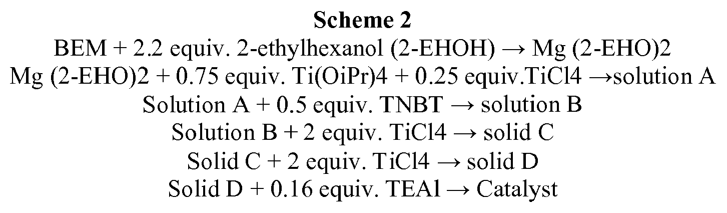

Catalyst 1 Syntheses: MAGALA BEM (16.8wt% BEM and 0.12 wt% Al in TEAl in heptane) and TEAl (25wt% in heptane), 2-EHOH, TNBT, TiC14, ClTi(OiPr)3 (1.0 M in hexane), and Ti(OiPr)4 were purchased and used as received. Hexane used for catalyst preparation and polymerization was purchased and purified by passing through molecular sieves and copper catalyst purification columns. Catalysts were synthesized in a 500 mL glass reactor with Morton-type indentation. An overhead agitator consisting of a metal shaft with two sets of three-blades impeller and an addition funnel were used. Catalysts were prepared under plant nitrogen at room temperature with an agitation speed of 250 RPM unless otherwise stated.

54.7g (84 mmol) BEM diluted by hexane to 100 mL was transferred to a reactor via cannular with positive nitrogen. 20 mL hexane was added to rinse the cannular and the graduated cylinder. The agitation was started and 28.16 g (216 mmol) 2-EHOH diluted by hexane to a 50 mL solution was drop wise added to the reactor. After the addition, the solution was stirred for an hour. 50 mL 2.0 M ClTi(OiPr)₃ (100 mmol) hexane solution was further diluted by hexane to 100 mL and transferred slowly to the reactor via cannular. After the addition, the solution was further stirred for one hour. Pre-prepared 300 mL hexane solution of TiCl₄/TNBT (TiCl₄=37.04g, 200 mmol and TNBT=34.4 g, 100 mmol) was drop wise added to the stirring solution over two hours. After the addition, the slurry was further stirred for one hour. The solid was washed three times with hexane, each with 200 mL. 100 mL hexane was added and the agitation resumed. 100mL hexane solution of 37.04 g (200mmol) TiCl₄ was slowly added to the slurry. After the addition, the slurry was further stirred for one hour. The solid was then washed five times, each with 200 mL hexane. Another 100mL hexane was added. 50 mL hexane solution of TEAl (7.39 g, 16 mmol) was slowly added. The slurry became dark brown. The slurry was further stirred for one hour and collected for catalyst characterization.

Catalyst 2 Syntheses: Catalyst 2 was synthesized similar to that of Catalyst 1 except that 1) ClTi(OiPr)₃ was replaced by first adding 20.68 g (75 mmol) Ti(OiPr)₄ followed by one hour stirring, and then 4.70 g (25mmol) TiCl₄, and 2) instead of using pre-prepared TiCl₄/TNBT, 17.02 g (50 mmol) TNBT was added and the solution was stirred for 1 hour, then 37.04 g (200mmol) TiCl₄ was dropwise added to form the solid.

Reference catalyst elemental components and those of Catalyst 1 and 2 are illustrated in Table 1 below.

**TABLE 1**

| Catalyst | Reference | Catalyst 1 | Catalyst 2 |
|---|---|---|---|
| Al (wt%) | 3.6 | 2.8 | 2.1 |
| Mg(wt%) | 13.1 | 13.6 | 12.4 |
| Ti (wt%) | 8.8 | 6.3 | 9.2 |

Polymers were formed with the various catalysts via the conditions illustrated in Table 2 (H₂/C₂=0.25 and H₂/C₂ feed ratio of 1.0).

**TABLE 2**

| | |
|---|---|
| Cocatalyst [TIBA1] | 0.25 mmol/L |
| Temperature | 80 °C |
| Polymerization time | 1 hr |
| Pressure | 125 psi |
| Diluent | Hexane |
| Ethylene flow rate | 8 SLPM |
| H2/C2 feed ratios | 0.25, 1.0 |

Targeted polymer properties and those formed from Catalyst 1 and 2 are illustrated in Table 3 below and Figure 2.

**TABLE 3**

| | Reference catalyst | Catalyst 1 | Catalyst 2 |
|---|---|---|---|
| Adj. H₂/C₂ | 0.49 | 0.44 | 0.57 |
| Mg based Activity (g/g/h) | 15000 | 14000 | 37000 |
| B.D. (g/cc) | 0.41 | 0.38 | 0.33 |
| D50 (µm) | 222 | 460 | 497 |
| Span | 0.9 | 0.9 | 1.1 |
| Fines (%) | 0 | 0 | 0 |
| Density (g/cc) | 0.952 | 0.950 | 0.952 |
| MI2 (dg/min) | 0.76 | 1.05 | 0.81 |
| MI5 (dg/min) | 2.57 | 3.59 | 2.59 |
| HLMI (dg/min) | 31.44 | 47.80 | 28.96 |
| SR2 | 41.2 | 45.6 | 35.7 |
| SR5 | 12.2 | 13.3 | 11.2 |
| Wax (%) | 0.3 | 0.6 | 0.2 |
| Mn (g/mol) | 18000 | 18000 | 18000 |
| Mw(g/mol) | 137000 | 145000 | 130000 |
| Mz(g/mol) | 738000 | 849000 | 639000 |
| Mw/Mn | 7.7 | 8.1 | 7.1 |
| Mz/Mw | 5.4 | 5.9 | 4.9 |
| Ea (KJ/mol) | 25.02 | 27.9 | 25.4 |
| η (Pa*s) | 23200 | 17000 | 16600 |
| λ (s) | 0.0129 | 0.0109 | 0.0109 |
| a | 0.273 | 0.291 | 0.301 |

The polymerization results illustrate that the various catalysts do not produce identical polymers (as further illustrated in Figure 3). In summary, Catalyst 1 showed similar catalyst characteristic to the reference polymer properties, *e.g.,* catalyst activity, polymer molecular weight distribution, and rheology. However, Catalyst 2 had a higher activity, slightly lower bulk density, narrower molecular weight distribution and lower hydrogen response than either Catalyst 1 or the reference catalyst. All final catalysts and their intermediates were measured by Malvern hydro 2000µP in hexane slurry forms. Malvern Scirocco 2000 was used for polymer samples.

While the foregoing is directed to embodiments of the present invention, other and further embodiments of the invention may be devised without departing from the basic scope thereof and the scope thereof is determined by the claims that follow.

## Claims

1. A method of forming a catalyst comprising:
contacting an alkyl magnesium compound with a viscosity modifier prior to contact with an alcohol to form a magnesium dialkoxide compound;
contacting the magnesium dialkoxide compound with a first titanium alkoxide and a first agent to form a first solution reaction product "A", wherein the titanium alkoxide and the first agent are non-blended individual components prior to contacting the magnesium dialkoxide;
contacting the first solution reaction product "A" with a second titanium alkoxide to form a second solution reaction product "B";
contacting the second solution reaction product "B" with a second agent to form a first solid reaction product "C";
contacting the first solid reaction product "C" with a third agent to form a second solid reaction product "D"; and
contacting the second solid reaction product "D" with a reducing agent to form a catalyst component with the proviso that the solid reaction product D is not contacted with TiCl₄ before contacting it with a reducing agent to form a catalyst component.

2. The method of claim 1, wherein the alkyl magnesium compound is represented by the formula MgR¹R², wherein R¹ and R² are independently selected from C₁ to C₁₀ alkyls or wherein the alkyl magnesium compound is selected from butyl ethyl magnesium, diethyl magnesium, dipropyl magnesium, dibutyl magnesium, and combinations thereof.

3. The method of claim 1, wherein the viscosity modifier is represented by the formula AlR³₃, wherein R³ is selected from C₁ to C₁₀ alkyl compounds, preferably wherein the viscosity modifier is selected from trimethyl aluminum, triisobutyl aluminum, triethyl aluminum, n-octyl aluminum, n-hexyl aluminum, and combinations thereof, more preferably wherein the viscosity modifier comprises triethyl aluminum.

4. The method of claim 3, wherein the viscosity modifier contacts the alkyl magnesium compound in an equivalent of from 0.01 to 0.6.

5. The method of claim 1, wherein the alcohol is represented by the formula R⁴OH, wherein R⁴ is selected from C₂ to C₂₀ alkyls, or wherein the alcohol is selected from butanol, isobutanol, 2-ethylhexanol, and combinations thereof, or wherein the alcohol contacts the alkyl magnesium compound in an equivalent of from 0.5 to 6.

6. The method of claim 1, wherein the first titanium alkoxide is represented by the formula Ti(OR⁵)₄, wherein R⁵ is selected from C₂ to C₂₀ alkyl groups, preferably wherein the first titanium alkoxide is selected from titanium 2-ethylhexyl alkoxide, titanium isopropoxide, titanium n-butoxide, and combinations thereof, or wherein the first titanium alkoxide contacts the magnesium dialkoxide compound in an equivalent of from 0.25 to 3.

7. The method of claim 1, wherein the first agent comprises a metal halide, or wherein the first agent comprises titanium halide, or wherein the first agent contacts the magnesium dialkoxide compound in an equivalent of from 0.05 to 2.

8. The method of claim 1, wherein the second titanium alkoxide is represented by the formula Ti(OR⁶)₄, wherein R⁶ is selected from C₂ to C₂₀ alkyl groups, preferably wherein the second titanium alkoxide is selected from titanium 2-ethylhexyl alkoxide, titanium isopropoxide, titanium n-butoxide, and combinations thereof, or wherein the second titanium alkoxide contacts the first solution reaction product "A" in an equivalent of from 0.05 to 3.

9. The method of claim 1, wherein the second agent comprises a metal halide, or wherein the second agent contacts the second solution reaction product "B" in an equivalent of from 0.5 to 5.

10. The method of claim 1, wherein the third agent comprises a metal halide, or wherein the third agent contacts the first solid reaction product "C" in an equivalent of from 0.5 to 5.

11. The method of claim 1, wherein the reducing agent is selected from an organolithium compound, an organomagnesium compound, an organoaluminum compound, and combinations thereof.

12. A catalyst component formed by the method of claim 1.

13. A method for polymerizing olefin monomers comprising:
contacting olefin monomer with a catalyst to form a polyolefin, wherein the catalyst is formed by a process comprising:
contacting an alkyl magnesium compound with a viscosity modifier prior to contact with an alcohol to form a magnesium dialkoxide compound;
contacting the magnesium dialkoxide compound with a first titanium alkoxide and a first agent to form a first solution reaction product "A", wherein the titanium alkoxide and the first agent are non-blended individual components prior to contacting the magnesium dialkoxide;
contacting the first solution reaction product "A" with a second titanium alkoxide to form a second solution reaction product "B";
contacting the second solution reaction product "B" with a second agent to form a first solid reaction product "C";
contacting the first solid reaction product "C" with a third agent to form a second solid reaction product "D"; and
contacting the second solid reaction product "D" with a reducing agent to form a catalyst component with the proviso that the solid reaction product D is not contacted with TiCl₄ before contacting it with a reducing agent to form a catalyst component.

14. The method of claim 13, wherein the polyolefin is high density polyethylene.

## Patentansprüche

1. Verfahren zum Bilden eines Katalysators, umfassend:
Inkontaktbringen einer Alkylmagnesiumverbindung mit einem Viskositätsmodifizierer vor dem Kontakt mit einem Alkohol, um eine Magnesiumdialkoxidverbindung zu bilden;
Inkontaktbringen der Magnesiumdialkoxidverbindung mit einem ersten Titanalkoxid und einem ersten Mittel, um ein erstes Lösungsreaktionsprodukt "A" zu bilden, wobei das Titanalkoxid und das erste Mittel nicht gemischte Einzelkomponenten sind, bevor das Inkontaktbringen des Magnesiumdialkoxids stattfindet;
Inkontaktbringen des ersten Lösungsreaktionsprodukts "A" mit einem zweiten Titanalkoxid, um ein zweites Lösungsreaktionsprodukt "B" zu bilden;
Inkontaktbringen des zweiten Lösungsreaktionsprodukts "B" mit einem zweiten Mittel, um ein erstes festes Reaktionsprodukt "C" zu bilden;
Inkontaktbringen des ersten festen Reaktionsprodukts "C" mit einem dritten Mittel, um ein zweites festes Reaktionsprodukt "D" zu bilden; und
Inkontaktbringen des zweiten festen Reaktionsprodukts "D" mit einem Reduktionsmittel, um eine Katalysatorkomponente mit der Maßgabe zu bilden, dass das feste Reaktionsprodukt D nicht mit TiCl₄ in Kontakt gebracht wird, bevor es mit einem Reduktionsmittel in Kontakt gebracht wird, um eine Katalysatorkomponente zu bilden.

2. Verfahren nach Anspruch 1, wobei die Alkylmagnesiumverbindung durch die Formel MgR¹R² dargestellt wird, wobei R¹ und R² unabhängig voneinander ausgewählt sind aus C₁-bis C₁₀-Alkylen, oder
wobei die Alkylmagnesiumverbindung aus Butylethylmagnesium, Diethylmagnesium, Dipropylmagnesium, Dibutylmagnesium und Kombinationen davon ausgewählt ist.

3. Verfahren nach Anspruch 1, wobei der Viskositätsmodifizierer durch die Formel AlR³₃ dargestellt wird, wobei R³ aus C₁- bis C₁₀-Alkylverbindungen ausgewählt ist, wobei der Viskositätsmodifizierer vorzugsweise aus Trimethylaluminium, Triisobutylaluminium, Triethylaluminium, n-Octylaluminium, n-Hexylaluminium und Kombinationen davon ausgewählt ist, wobei der Viskositätsmodifizierer vorzugsweise Triethylaluminium umfasst.

4. Verfahren nach Anspruch 3, wobei der Viskositätsmodifizierer mit der Alkylmagnesiumverbindung in einem Äquivalent von 0,01 bis 0,6 in Kontakt kommt.

5. Verfahren nach Anspruch 1, wobei der Alkohol durch die Formel R⁴OH dargestellt wird, wobei R⁴ aus C₂- bis C₂₀-Alkylen ausgewählt ist oder wobei der Alkohol aus Butanol, Isobutanol, 2-Ethylhexanol und Kombinationen davon ausgewählt ist oder wobei der Alkohol mit der Alkylmagnesiumverbindung in einem Äquivalent von 0,5 bis 6 in Kontakt kommt.

6. Verfahren nach Anspruch 1, wobei das erste Titanalkoxid durch die Formel Ti(OR⁵)₄ dargestellt wird, wobei R⁵ aus C₂- bis C₂₀-Alkylgruppen ausgewählt ist, wobei das erste Titanalkoxid vorzugsweise aus Titan-2-ethylhexylalkoxid, Titanisopropoxid, Titan-n-butoxid und Kombinationen davon ausgewählt ist oder wobei das erste Titanalkoxid mit der Magnesiumdialkoxidverbindung in einem Äquivalent von 0,25 bis 3 in Kontakt kommt.

7. Verfahren nach Anspruch 1, wobei das erste Mittel ein Metallhalogenid umfasst oder wobei das erste Mittel Titanhalogenid umfasst oder wobei das erste Mittel mit der Magnesiumdialkoxidverbindung in einem Äquivalent von 0,05 bis 2 in Kontakt kommt.

8. Verfahren nach Anspruch 1, wobei das zweite Titanalkoxid durch die Formel Ti(OR⁶)₄ dargestellt wird, wobei R⁶ aus C₂- bis C₂₀-Alkylgruppen ausgewählt ist, wobei das zweite Titanalkoxid vorzugsweise aus Titan-2-ethylhexylalkoxid, Titanisopropoxid, Titan-n-butoxid und Kombinationen davon ausgewählt ist oder wobei das zweite Titanalkoxid mit dem ersten Lösungsreaktionsprodukt "A" in einem Äquivalent von 0,05 bis 3 in Kontakt kommt.

9. Verfahren nach Anspruch 1, wobei das zweite Mittel ein Metallhalogenid umfasst oder wobei das zweite Mittel mit dem zweiten Lösungsreaktionsprodukt "B" in einem Äquivalent von 0,5 bis 5 in Kontakt kommt.

10. Verfahren nach Anspruch 1, wobei das dritte Mittel ein Metallhalogenid umfasst oder wobei das dritte Mittel mit dem festen Reaktionsprodukt "C" in einem Äquivalent von 0,5 bis 5 in Kontakt kommt.

11. Verfahren nach Anspruch 1, wobei das Reduktionsmittel aus einer Organolithiumverbindung, einer Organomagnesiumverbindung, einer Organoaluminiumverbindung und Kombinationen davon ausgewählt ist.

12. Katalysatorkomponente, die durch das Verfahren nach Anspruch 1 gebildet ist.

13. Verfahren zum Polymerisieren von Olefinmonomeren, umfassend:
Inkontaktbringen eines Olefinmonomers mit einem Katalysator, um ein Polyolefin zu bilden, wobei der Katalysator durch ein Verfahren gebildet wird, umfassend:
Inkontaktbringen einer Alkylmagnesiumverbindung mit einem Viskositätsmodifizierer vor dem Kontakt mit einem Alkohol, um eine Magnesiumdialkoxidverbindung zu bilden;
Inkontaktbringen der Magnesiumdialkoxidverbindung mit einem ersten Titanalkoxid und einem ersten Mittel, um ein erstes Lösungsreaktionsprodukt "A" zu bilden, wobei das Titanalkoxid und das erste Mittel nicht gemischte Einzelkomponenten sind, bevor das Inkontaktbringen des Magnesiumdialkoxids stattfindet;
Inkontaktbringen des ersten Lösungsreaktionsprodukts "A" mit einem zweiten Titanalkoxid, um ein zweites Lösungsreaktionsprodukt "B" zu bilden;
Inkontaktbringen des zweiten Lösungsreaktionsprodukts "B" mit einem zweiten Mittel, um ein erstes festes Reaktionsprodukt "C" zu bilden;
Inkontaktbringen des ersten festen Reaktionsprodukts "C" mit einem dritten Mittel, um ein zweites festes Reaktionsprodukt "D" zu bilden; und
Inkontaktbringen des zweiten festen Reaktionsprodukts "D" mit einem Reduktionsmittel, um eine Katalysatorkomponente mit der Maßgabe zu bilden, dass das feste Reaktionsprodukt D nicht mit TiCl₄ in Kontakt gebracht wird, bevor es mit einem Reduktionsmittel in Kontakt gebracht wird, um eine Katalysatorkomponente zu bilden.

14. Verfahren nach Anspruch 13, wobei das Polyolefin Niederdruckpolyethylen ist.

## Revendications

1. Procédé de formation d'un catalyseur comprenant :
la mise en contact d'un composé alkylmagnésium avec un modificateur de viscosité avant sa mise en contact avec un alcool pour former un composé dialcoolate de magnésium ;
la mise en contact du composé dialcoolate de magnésium avec un premier alcoolate de titane et un premier agent pour former un premier produit de réaction en solution "A", l'alcoolate de titane et le premier agent étant des composants individuels non mélangés avant la mise en contact du dialcoolate de magnésium ;
la mise en contact du premier produit de réaction en solution "A" avec un second alcoolate de titane pour former un second produit de réaction en solution "B" ;
la mise en contact du second produit de réaction en solution "B" avec un deuxième agent pour former un premier produit de réaction solide "C" ;
la mise en contact du premier produit de réaction solide "C" avec un troisième agent pour former un second produit de réaction solide "D" ; et
la mise en contact du second produit de réaction solide "D" avec un agent réducteur pour former un composant catalyseur, à condition que le produit de réaction solide D ne soit pas mis en contact avec TiCl₄ avant d'être mis en contact avec un agent réducteur pourformer un composant catalyseur.

2. Procédé selon la revendication 1, le composé alkylmagnésium étant représenté par la formule MgR¹R², dans laquelle R¹ et R² sont indépendamment choisis parmi les groupes alkyle en C₁ à C₁₀ ou
le composé alkylmagnésium étant choisi parmi le butyléthylmagnésium, le diéthylmagnésium, le dipropylmagnésium, le dibutylmagnésium et leurs combinaisons.

3. Procédé selon la revendication 1, le modificateur de viscosité étant représenté par la formule AlR³₃, dans laquelle R³ est choisi parmi les composés alkyle en C₁ à C₁₀, de préférence le modificateur de viscosité étant choisi parmi le triméthylaluminium, le triisobutylaluminium, le triéthylaluminium, le n-octylaluminium, le n-hexylaluminium et leurs combinaisons, de préférence encore le modificateur de viscosité comprenant du triéthylaluminium.

4. Procédé selon la revendication 3, le modificateur de viscosité entrant en contact avec le composé alkylmagnésium en équivalence de 0,01 à 0,6.

5. Procédé selon la revendication 1, l'alcool étant représenté par la formule R⁴OH, dans laquelle R⁴ est choisi parmi les groupes alkyle en C₂ à C₂₀, ou l'alcool étant choisi parmi le butanol, l'isobutanol, le 2-éthylhexanol et leurs combinaisons, ou l'alcool étant mis en contact avec le composé alkylmagnésium en équivalence de 0,5 à 6.

6. Procédé selon la revendication 1, le premier alcoolate de titane étant représenté par la formule Ti(OR⁵)₄, dans laquelle R⁵ est choisi parmi les groupes alkyle en C₂ à C₂₀, de préférence le premier alcoolate de titane étant choisi parmi l'alcoolate 2-éthylhexanolate de titane, l'isopropanolate de titane, le n-butanolate de titane et leurs combinaisons, ou premier alcoolate de titane étant mis en contact avec le composé dialcoolate de magnésium en équivalence de 0,25 à 3.

7. Procédé selon la revendication 1, le premier agent comprenant un halogénure métallique, ou le premier agent comprenant un halogénure de titane, ou le premier agent étant mis en contact avec le composé dialcoolate de magnésium en équivalence de 0,05 à 2.

8. Procédé selon la revendication 1, le second alcoolate de titane étant représenté par la formule Ti(OR⁶)₄, dans laquelle R⁶ est choisi parmi les groupes alkyle en C₂ à C₂₀, de préférence le second alcoolate de titane étant choisi parmi l'alcoolate 2-éthylhexanolate de titane, l'isopropanolate de titane, le n-butanolate de titane et leurs combinaisons, ou le second alcoolate de titane étant mis en contact avec le premier produit de réaction en solution "A" en équivalence de 0,05 à 3.

9. Procédé selon la revendication 1, le second agent comprenant un halogénure métallique, ou le deuxième agent étant mis en contact avec le second produit de réaction en solution "B" en équivalence de 0,5 à 5.

10. Procédé selon la revendication 1, le troisième agent comprenant un halogénure métallique, ou le troisième agent étant mis en contact avec le premier produit de réaction solide "C" en équivalence de 0,5 à 5.

11. Procédé selon la revendication 1, l'agent réducteur étant choisi parmi un composé organolithium, un composé organomagnésium, un composé organoaluminium et leurs combinaisons.

12. Composant catalytique formé selon le procédé de la revendication 1.

13. Procédé de polymérisation de monomères oléfiniques comprenant :
la mise en contact d'un monomère oléfinique avec un catalyseur pour former une polyoléfine, le catalyseur étant formé selon un procédé comprenant :
la mise en contact d'un composé alkylmagnésium avec un modificateur de viscosité avant sa mise en contact avec un alcool pour former un composé dialcoolate de magnésium ;
la mise en contact du composé dialcoolate de magnésium avec un premier alcoolate de titane et un premier agent pour former un premier produit de réaction en solution "A", l'alcoolate de titane et le premier agent étant des composants individuels non mélangés avant la mise en contact du dialcoolate de magnésium ;
la mise en contact du premier produit de réaction en solution "A" avec un second alcoolate de titane pour former un second produit de réaction en solution "B" ;
la mise en contact du second produit de réaction en solution "B" avec un deuxième agent pour former un premier produit de réaction solide "C" ;
la mise en contact du premier produit de réaction solide "C" avec un troisième agent pour former un second produit de réaction solide "D" ; et
la mise en contact du second produit de réaction solide "D" avec un agent réducteur pour former un composant catalyseur, à condition que le produit de réaction solide D ne soit pas mis en contact avec TiCl₄ avant de d'être mis en contact avec un agent réducteur pour former un composant catalyseur.

14. Procédé selon la revendication 13, la polyoléfine étant un polyéthylène haute densité.
